# EUROPEAN PATENT APPLICATION

(11) **EP 2 669 968 A1**
(43) Date of publication of application: **04.12.2013**
(21) Application number: 12827047.7
(22) Date of filing: 27.08.2012
(51) Int. Cl.: H01M 2/02, H01M 2/04, H01M 10/50

(54) **CYLINDRICAL BATTERY**

(30) Priority: 31.08.2011 CN 201110254764
(71) Applicant: Huawei Technologies Co., Ltd, Shenzhen, Guangdong 518129 (CN)
(72) Inventor: AN, Qiangxin, Shenzhen Guangdong 518129 (CN)
(74) Representative: Maiwald Patentanwalts GmbH
(86) International application number: PCT/CN2012/080598
(87) International publication number: WO 2013/029508

(57) **Abstract**

Embodiments of the present invention disclose a cylindrical cell, including: a housing 1, at least one hollow cylinder 2, and at least two roll cores 3, upper and lower conductor junction plates 4, upper and lower cover plates 5, two poles 6 at an anode and a cathode, and an injection hole 8. The poles 6 pass through the cover plates 5, and an insulating material is used to separate the poles 6 from the cover plates 5; the poles 6 at the anode and the cathode are respectively fixedly connected to the conductor junction plates 4 at the anode and the cathode; the sealable injection hole 8 is arranged on the cover plates 5; the hollow cylinder 2 is fixedly connected to the cover plates 5; the hollow cylinder 2 is sleeved in through holes 41 of the conductor junction plates 4; the roll cores 3 are distributed around the hollow cylinder 2; tabs are arranged at the anode and the cathode of each roll core 3, and the tabs at the anode and the cathode of the roll core 3 are fixedly connected to the upper and lower conductor junction plates 4; the upper and lower conductor junction plates 4 are respectively connected to the cover plates 5 at the anode and the cathode of the cell; and the cover plates 5 at the anode and the cathode are respectively fixedly connected to upper and lower ends of the housing 1. The heat dissipation performance in the cell and the safety performance of the cell are improved.

## Description

### TECHNICAL FIELD

The present invention relates to the field of mechanical manufacturing technologies, and in particular, to a cylindrical cell.

### BACKGROUND

With growing shortage of fossil energy, continuous rise of oil prices and increasing deterioration of environmental pollution problems throughout the world, the demand of people for clean and renewable energy becomes more and more urgent. The cell, as an efficient and renewable energy carrier, has been widely used in communications and electronics industries. Currently, people have an increasingly high demand for the capacity and the cycle life of the cell in the field of cell applications.

Taking a lithium-ion cell, abbreviated as a lithium cell as an example: Lithium cells are mainly categorized into three types, that is, a multi-layer laminated type (with a square section), a double-electrode oval winding type (with a square section) and a double-electrode circular winding type (with a circular section).

An advantage of the multi-layer laminated type is that a plurality of cells (cell) are connected in parallel to facilitate formation of high-capacity cells, and disadvantages thereof are low production efficiency and difficulty in packaging and short circuit prevention.

An advantage of the double-electrode oval winding type and the double-electrode circular winding type is high efficiency, and a disadvantage thereof is difficulty in manufacturing high-capacity cells because positive and negative electrodes of the cell are made of single integral electrodes that are too long, sometimes up to 3 to 5 meters or even longer, bringing about great difficulty in winding in production of high-capacity cells. Meanwhile, it is difficult to control and eliminate a deviation on electrode packaging and a short circuit of the roll core. Therefore, acceptability and yield of the electrodes are low.

In addition, the positive and negative electrodes of the double-electrode oval winding cell have lower tension, which, with cycle use of the cell, gradually becomes relaxed due to an impact caused by an expansion force of the electrodes from charging and discharging, thereby destroying a contact interface of the electrodes, and resulting in a short cycle life of the cell. The cylindrical cell of the double-electrode circular winding type may have a relatively longer cycle life due to a larger tension of the electrodes.

For fields requiring high-capacity and high-power cells, such as electric vehicles, uninterrupted power supply (Uninterruptible Power System, UPS), communications equipment, and other applications, safety performance of the lithium-ion cell is particularly important. One of the important factors that affect the safety performance of the lithium-ion cell is the heat dissipation performance of the cell. If heat generated by the cell in a working state cannot be dissipated in time, the gradually accumulated heat may result in thermal runaway and even explosion and fire accidents.

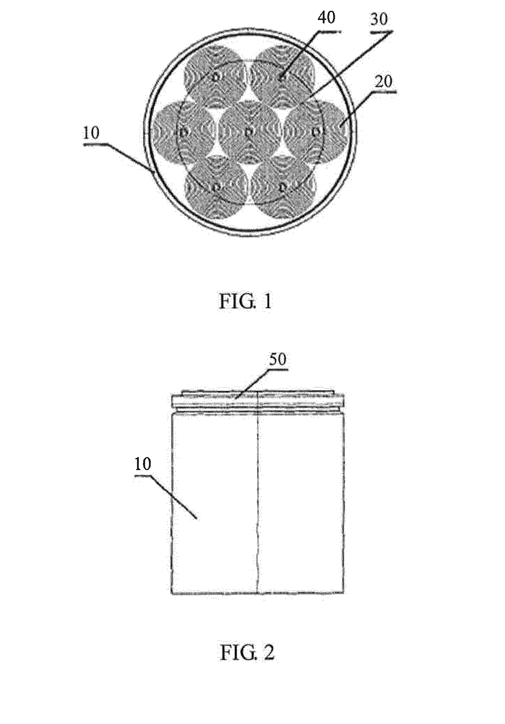

A cylindrical cell is shown in FIG. 1 and FIG. 2, including: a housing 10, electrolyte, and a cover body 50. The housing 10 is in a cylindrical shape. The housing 10 is provided with 2 to 7 roll cores 20 used for a lithium-ion cell. The roll cores 20 used for the lithium-ion cell are respectively inserted into holes of the roll cores on a fixed ring. Tabs 40 at the cathode and the anode of each roll core used for the lithium-ion cell are respectively fitted in through holes of upper and lower metal junction plates 30. The tabs 40 at the cathode and the anode are welded together with the upper and lower metal junction plates 30. The metal junction plates 30 are connected to the cover bodies 50 at the positive and negative electrodes of the cell. The electrolyte is filled into the housing 10. The cover body 50 and the housing 10 are sealed in a mechanical manner or by laser welding. The cell shown in FIG. 1 and FIG. 2 is a high-power and high-capacity cylindrical cell formed by roll cores connected in parallel, but has poor heat dissipation performance due to a small surface for heat dissipation, and therefore has poor safety performance.

### SUMMARY

A technical problem to be solved by embodiments of the present invention is to provide a cylindrical cell to improve the heat dissipation performance and safety performance of the cell.

In order to solve the above-mentioned technical problem, embodiments of the cylindrical cell provided in the present invention can be implemented by using the following technical solution:

A cylindrical cell includes:
a housing 1, at least one hollow cylinder 2, at least two roll cores 3, upper and lower conductor junction plates 4, upper and lower cover plates 5, two poles 6 at an anode and a cathode, and an injection hole 8, where:
   the poles 6 pass through the cover plates 5, and an insulating material is used to separate the poles 6 from the cover plates 5;
   the poles 6 at the anode and the cathode are respectively fixedly connected to the conductor junction plates 4 at the anode and the cathode;
   the sealable injection hole 8 is arranged on the cover plates 5;
   the hollow cylinder 2 is fixedly connected to the cover plates 5; and the hollow cylinder 2 is sleeved in through holes 41 of the conductor junction plates 4;
   the roll cores 3 are distributed around the hollow cylinder 2; and tabs are arranged at the anode and the cathode of each roll core 3, and the tabs at the anode and the cathode of the roll core 3 are fixedly connected to the upper and lower conductor junction plates 4;
   the upper and lower conductor junction plates 4 are respectively connected to the cover plates 5 at the anode and the cathode of the cell; and
   the cover plates 5 at the anode and the cathode are respectively fixedly connected to upper and lower ends of the housing 1.

The above-mentioned technical solution has the following beneficial effect: The honeycombed hollow cylinder provided within the cylindrical cell increases the surface for heat dissipation of the cell, thereby improving the heat dissipation performance and safety performance of the cell.

### BRIEF DESCRIPTION OF DRAWINGS

To describe the technical solution in the embodiments of the present invention more clearly, the following briefly introduces the accompanying drawings required for describing the embodiments of the present invention. Apparently, the accompanying drawings in the following description show merely some embodiments of the present invention, and persons skilled in the art may still derive other drawings from these accompanying drawings without creative efforts.

FIG. 1 is a schematic structural sectional view of a cylindrical cell according to the prior art;

FIG. 2 is a schematic structural side view of a cylindrical cell according to the prior art;

FIG. 3 is a schematic structural cross-sectional view of a cylindrical cell according to an embodiment of the present invention;

FIG. 4 is a structural view of a junction plate of a cylindrical cell according to an embodiment of the present invention;

FIG. 5 is a schematic structural view of a cover plate of a cylindrical cell according to an embodiment of the present invention; and

FIG. 6 is a schematic structural side view of a cylindrical cell according to an embodiment of the present invention.

### DESCRIPTION OF EMBODIMENTS

The following clearly and completely describes the technical solution in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiment of the present invention without creative efforts shall fall within the protection scope of the present invention.

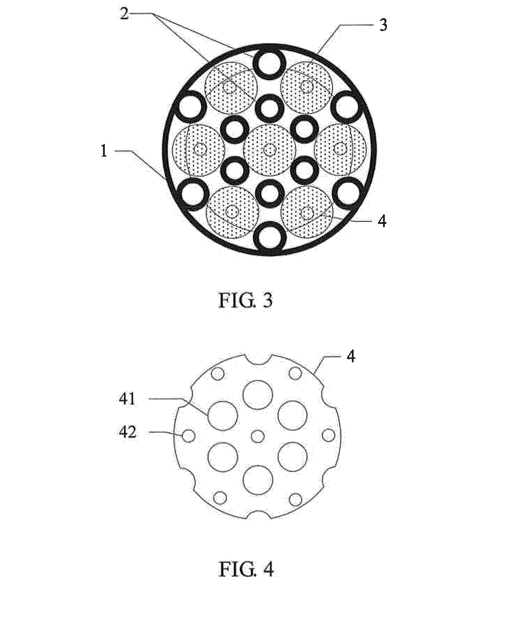

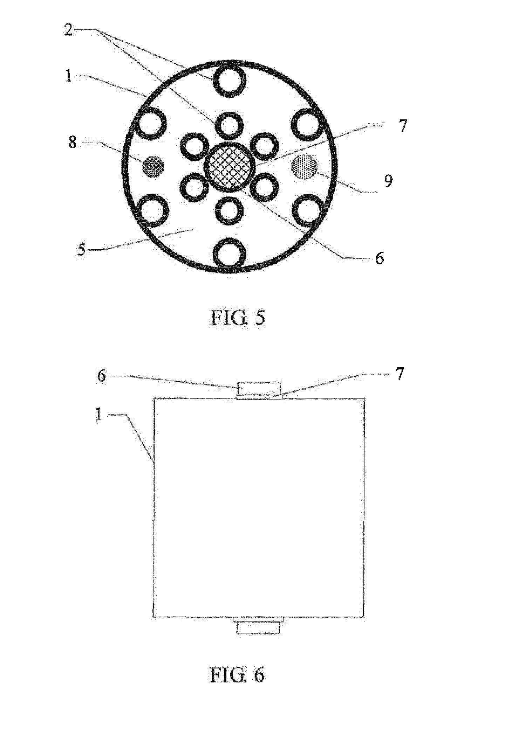

A technical problem to be solved by the embodiments of the present invention is to provide a cylindrical cell. Referring to FIG. 3 to FIG. 6, FIG. 3 is a schematic structural cross-sectional view of a cylindrical cell according to an embodiment of the present invention, FIG. 4 is a structural view of a junction plate of a cylindrical cell according to an embodiment of the present invention, FIG. 5 is a schematic structural view of a cover plate of a cylindrical cell according to an embodiment of the present invention, and FIG. 6 is a schematic structural side view of a cylindrical cell according to an embodiment of the present invention. The cylindrical cell provided in the embodiments of the present invention includes: a housing 1, at least one hollow cylinder 2, at least two roll cores 3, upper and lower conductor junction plates 4, upper and lower cover plates 5, two poles 6 at an anode and a cathode, and an injection hole 8.

The poles 6 pass through the cover plates 5, and an insulating material is used to separate the poles 6 from the cover plates 5. The poles 6 at the anode and the cathode are respectively fixedly connected to the conductor junction plates 4 at the anode and the cathode.

Optionally, the poles 6 at the anode and the cathode pass through one cover plate or respectively pass through two cover plates. Optionally, the insulating material may be a rubber washer 7. Certainly, other insulating materials may also be used, which does not affect implementation of the embodiments of the present invention.

The sealable injection hole 8 is arranged on the cover plates 5.

Optionally, the injection hole 8 is sealed by a steel ball or a column bolt. The electrolyte may be injected into the housing 1 through the injection hole 8, and after injection, sealed by the steel ball or the column bolt. Therefore, the electrolyte will be present in the entire space within the housing 1 and in the roll cores 3.

The hollow cylinder 2 is fixedly connected to the cover plates 5. The hollow cylinder 2 is sleeved in through holes 41 of the conductor junction plates 4.

The hollow cylinder 2 is sleeved with the conductor junction plates 4, and a part of the hollow cylinder 2 may pass through the conductor junction plates 4, so that heat within an inner chamber of the hollow cylinder may be dissipated quickly.

Optionally, the hollow cylinder 2 may be: a hollow cylinder or a hollow oval cylinder or a hollow prism. Optionally, the fixed connection between the hollow cylinder 2 and the cover plates 5 may be: laser welding between the hollow cylinder 2 and the cover plates 5.

The roll cores 3 are distributed around the hollow cylinder 2. Tabs are arranged at the anode and the cathode of each roll core 3, and the tabs at the anode and the cathode of the roll core 3 are fixedly connected to the upper and lower conductor junction plates 4.

The tabs connect terminals of the positive and negative electrodes of the cell. The tabs at the anode and the cathode of the roll core 3 may be fixedly connected to the upper and lower conductor junction plates 4 by welding.

Optionally, the roll cores 3 may be: roll cores of the cylindrical lithium-ion cell. Alternatively, the roll cores 3 may be distributed around the hollow cylinder 2 in the following way: The roll cores 3 are bonded to the hollow cylinder 2, and the section is honeycombed, which can prevent the roll cores 3 and the hollow cylinder 2 from loosening and shifting. Preferably, the tab at the cathode is made of an aluminum strip, and the tab at the anode is made of a nickel strip, a copper strip, or a nickel-plated copper strip. It should be noted that other conducting materials may be used for the tabs without affecting implementation of the embodiments of the present invention. Preferably, the conductor junction plates 4 may be: metal conductor junction plates, which may be made of any one of aluminum, nickel, copper, nickel-plated copper, and stainless steel. It should be noted that the conductor junction plates 4 may be made of conductors other than metals, and that the used metals are not limited to the above-mentioned examples. Preferably, the tabs at the anode and the cathode of the roll core 3 are fixedly connected to the upper and lower conductor junction plates 4 in the following way: The tabs at the anode and the cathode of the roll core 3 are respectively sleeved in tab holes 42 in the upper and lower metal junction plates 4. The manner of sleeving can facilitate production, but the manner of fixed connection is not limited thereto.

The upper and lower conductor junction plates 4 are respectively connected to the cover plates 5 at the anode and the cathode of the cell.

The cover plates 5 at the anode and the cathode are respectively fixedly connected to upper and lower ends of the housing 1.

Optionally, the cover plates 5 at the anode and the cathode are respectively fixedly connected to the upper and lower ends of the housing 1 in the following way: The cover plates 5 at the anode and the cathode are respectively connected to the upper and lower ends of the housing 1 by laser welding.

Further, in order to prevent explosion, an explosion-proof apparatus 9 is arranged on the cover plates 5. Optionally, the explosion-proof apparatus 9 may be an explosion-proof valve or an explosion-proof line, and the explosion-proof apparatus 9 may be arranged on at least one cover plate 5.

The honeycombed hollow cylinder provided within the cylindrical cell in the embodiments of the present invention increases the surface for heat dissipation of the cell, thereby improving the heat dissipation performance and safety performance of the cell. The cylindrical cell provided by the embodiments of the present invention uses a structure in which a plurality of roll cores is connected in parallel in the cylinder, and therefore can effectively improve the capacity and power of the cell. The honeycombed hollow structure effectively solves the problem of heat dissipation for the high-capacity cell, and therefore facilitates extension of the cycle life of the cell.

A cylindrical cell provided in the embodiments of the present invention is introduced in detail above. In this specification, specific examples are used for illustrating principles and implementation manners of the present invention. The foregoing descriptions of the embodiments are merely used to help understand the methods of the present invention and core ideas thereof. Meanwhile, persons of ordinary skill in the art may make modifications to the specific implementation manners and application scopes according to the idea of the present invention. In conclusion, the content of the specification shall not be construed as a limitation to the present invention.

## Claims

1. A cylindrical cell, comprising:
a housing 1, at least one hollow cylinder 2, at least two roll cores 3, upper and lower conductor junction plates 4, upper and lower cover plates 5, two poles 6 at an anode and a cathode, and an injection hole 8, wherein:
the poles 6 pass through the cover plates 5, and an insulating material is used to separate the poles 6 from the cover plates 5;
the poles 6 at the anode and the cathode are respectively fixedly connected to the conductor junction plates 4 at the anode and the cathode;
the sealable injection hole 8 is arranged on the cover plates 5;
the hollow cylinder 2 is fixedly connected to the cover plates 5; and the hollow cylinder 2 is sleeved in through holes 41 of the conductor junction plates 4;
the roll cores 3 are distributed around the hollow cylinder 2; and tabs are arranged at the anode and the cathode of each roll core 3, and the tabs at the anode and the cathode of the roll core 3 are fixedly connected to the upper and lower conductor junction plates 4;
the upper and lower conductor junction plates 4 are respectively connected to the cover plates 5 at the anode and the cathode of the cell; and
the cover plates 5 at the anode and the cathode are respectively fixedly connected to upper and lower ends of the housing 1.

2. The cylindrical cell according to claim 1, wherein that the sealable injection hole 8 is arranged on the cover plates 5 comprises that:
the injection hole 8 is arranged on the cover plates 5, wherein the injection hole 8 is sealed by a steel ball or a column bolt.

3. The cylindrical cell according to claim 1, further comprising:
an explosion-proof apparatus arranged on the cover plates 5.

4. The cylindrical cell according to claim 3, wherein the explosion-proof apparatus is an explosion-proof valve or an explosion-proof line.

5. The cylindrical cell according to claim 1, wherein:
the hollow cylinder 2 is: a hollow cylinder or a hollow oval cylinder or a hollow prism.

6. The cylindrical cell according to any one of claims 1 to 5, wherein that the hollow cylinder 2 is fixedly connected to the cover plates 5 comprises that: the hollow cylinder 2 is connected to the cover plates 5 by laser welding.

7. The cylindrical cell according to any one of claims 1 to 5, wherein that the cover plates 5 at the anode and the cathode are respectively fixedly connected to upper and lower ends of the housing 1 comprises that:
the cover plates 5 at the anode and the cathode are respectively connected to the upper and lower ends of the housing 1 by laser welding.

8. The cylindrical cell according to any one of claims 1 to 5, wherein,
the roll cores 3 are roll cores of a cylindrical lithium-ion cell.

9. The cylindrical cell according to any one of claims 1 to 5, wherein that the roll cores 3 are distributed around the hollow cylinder 2 comprises that: the roll cores 3 is bonded to the hollow cylinder 2, with a honeycombed section.

10. The cylindrical cell according to any one of claims 1 to 5, wherein the tab at the cathode is made of an aluminum strip, and the tab at the anode is made of a nickel strip, a copper strip, or a nickel-plated copper strip.

11. The cylindrical cell according to any one of claims 1 to 5, wherein the conductor junction plates 4 are made of any one of aluminum, nickel, copper, nickel-plated copper, and stainless steel.

12. The cylindrical cell according to any one of claims 1 to 5, wherein the tabs at the anode and the cathode of the roll core 3 are fixedly connected to the upper and lower conductor junction plates 4 comprises:
the tabs at the anode and the cathode of the roll core 3 are respectively sleeved in tab holes 42 in the upper and lower metal junction plates 4.

13. The cylindrical cell according to any one of claims 1 to 5, wherein that the poles 6 pass through the cover plates 5 comprises that:
the poles 6 at the anode and the cathode is arranged to pass through one cover plate 5 or respectively pass through the upper and lower cover plates 5.

14. The cylindrical cell according to any one of claims 1 to 5, wherein the insulating material is a rubber washer 7.
